# EUROPEAN PATENT SPECIFICATION

(11) **EP 4 465 250 B1**
(45) Date of publication and mention of the grant of the patent: **14.10.2026**
(21) Application number: 23206420.4
(22) Date of filing: 27.10.2023
(51) Int. Cl.: G06V 10/764, G06V 10/82, G06V 10/98, G06V 20/58, G06V 10/80

(54) **VEHICLE, APPARATUS, COMPUTER PROGRAM, AND METHOD FOR OUT-OF-DISTRIBUTION OBJECT DETECTION**
FAHRZEUG, VORRICHTUNG, COMPUTERPROGRAMM UND VERFAHREN ZUR ERKENNUNG VON OBJEKTEN AUSSERHALB DER VERTEILUNG
VÉHICULE, APPAREIL, PROGRAMME INFORMATIQUE ET PROCÉDÉ DE DÉTECTION D'OBJET HORS DISTRIBUTION

(30) Priority: 17.05.2023 US 202363502832 P
(43) Date of publication of application: 20.11.2024
(73) Proprietor: AUMOVIO Germany GmbH, 60488 Frankfurt am Main (DE)
(72) Inventor: Shoeb, Youssef Omar, 81739 München (DE); Schwalbe, Gesina, 81739 München (DE); Nowzad, Azarm, 81739 München (DE)
(74) Representative: Aumovio Corporation

(56) References cited:
- BOGDOLL DANIEL ET AL: "Multimodal Detection of Unknown Objects on Roads for Autonomous Driving", 2022 IEEE INTERNATIONAL CONFERENCE ON SYSTEMS, MAN, AND CYBERNETICS (SMC), IEEE, 9 October 2022 (2022-10-09), pages 325 - 332, XP034230237, [retrieved on 20221118], DOI: 10.1109/SMC53654.2022.9945211
- DANIEL BOGDOLL ET AL: "Anomaly Detection in Autonomous Driving: A Survey", ARXIV.ORG, CORNELL UNIVERSITY LIBRARY, 201 OLIN LIBRARY CORNELL UNIVERSITY ITHACA, NY 14853, 17 April 2022 (2022-04-17), XP091205389

## Description

### Background

Embodiments of the present disclosure relate to a vehicle, an apparatus, a computer program, and a method for out-of-distribution detection. In particular, embodiments of the present disclosure relate to a concept of out-of-distribution detection in automotive applications.

Automotive systems for automated and highly automated driving (AD, HAD) rely on techniques for environment perception. For this, deep neural networks (DNN) are used for object detection (OD). OD may require processing a temporal sequence of sensor inputs (e.g., images from a video sequence) as input, and from these predict localization information (e.g., bounding boxes or pixel masks) and class information of objects in the image as output.

However, (DNN) models may not work reliably when presented with objects that are too different from objects in training data. Such an object, therefore, is referred to as out-of-distribution (OOD) object. Unreliable DNN models can lead to erroneous outputs such as false negatives and false class information. An exemplary form of OOD is concept drift, which occurs when novel object classes, such as a shopping cart, have not or rarely occurred in the training data. To ensure safety, it may be beneficial to identify instances of OOD objects to take appropriate countermeasures. These systems' underlying machine learning models are naturally uncertain, and when given data outside of their training distribution, their predictions may be unreliable, resulting in mediocre performance and safety concerns. If such unreliable situations are identified, the system can take suitable safety measures by identifying and flagging OOD objects, such as alerting the human driver or changing its behavior to prevent collisions with vulnerable road users (VRUs), such as pedestrians and cyclists.

OOD detection concepts propose to compute an anomaly score for single input images or regions therein, like the regions of detected objects. However, such concepts may exhibit an insufficient reliability. In practice, such concepts, e.g., may fail to recognize a person pushing a bicycle as an out-of-distribution object due to an instable and frequently switching class prediction.

Bogdolj Daniel et al. "Multimodal detection of unknown objects on roads for autonomous driving", IEEE international conference on systems, man, and cybernetics (SMC), 9 October 2022, discloses a pipeline to detect unknown objects. Instead of focusing on a single sensor modality, different data comprising lidar and camera data are combined using state-of-the art detection models in a sequential manner to detect unknown objects or anomalies.

Other concepts focusing on single frames suffer from false positives, particularly for border pixels that exhibit high aleatoric uncertainty.

Apart from that, other concepts are only applicable for certain tasks, e.g., because they use special features of the tasks, e.g., a certain model architecture used for object detection. Hence, it may be necessary, in practice, to adjust such an approach of OOD detection to various models and/or various tasks.

Hence, there may be a demand of an improved concept of OOD object detection.

### Summary

This demand may be satisfied by the subject-matter of the appended independent claims. The appended dependent claims address optional embodiments of the present disclosure.

Embodiments of the present disclosure provide a method for OOD. The method comprises obtaining first sensor data of an object at a first point in time and determining first information related to the object based on the first sensor data. Further, the method comprises obtaining second sensor data of the object at a second point in time and determining second information related to the object based on the second sensor data. Also, the method provides for determining if the object is an OOD object based on the first and the second information. In doing so, the use of the first and the second information allows to consider a temporal behavior of object detection results which may indicate that the object is an OOD object. As the skilled person having benefit from the present disclosure will appreciate, the proposed approach is applicable to various computer vision tasks that provide for multiple observations/measurements at different point in time. So, the proposed approach can be understood as "model-agnostic", i.e., applicable to any OD function, in contrast to other OOD concepts which are only applicable for certain models.

In some embodiments, the method further comprises tracking, in the first and the second senor data, at least one pixel of the object for identifying the object in the second sensor data. This may ensure that the first and second information relate to the same object to achieve comparability of the first and the second information for OOD object detection.

In practice, the first and the second information may indicate an object class of the object. The first and the second information, e.g., indicate that the object is one of a class of objects relevant for an application of the OOD detection. In automotive applications, examples of classes, e.g., are indicative of different types of traffic participants, road users, traffic signs, infrastructure objects, and/or the like. In such examples, the first information, e.g., indicates a different class than the second information. Thus, even OOD objects (e.g., a pedestrian pushing a bicycle) causing the OD to switch between different classes with a high certainty and, so, with a low anomaly score, can be detected as OOD objects as well.

In practice, determining if the object is an OOD object may comprise checking if the first and the second information is inconsistent and determining that object is an OOD object if the first and the second information are inconsistent. The first and the second information, e.g., are inconsistent if the first and the second information indicate different object classes for the object.

Optionally, determining if the first and the second information are inconsistent comprises obtaining a reliability of the first information and the second information and determining if the object is an OOD object based on a deviation between the reliability of the first and the second information. Embodiments of the present disclosure are particularly based on the finding that objects or object-classes sufficiently trained by the object detection are usually detected with a constant reliability (or uncertainty). In contrast, the reliability of OOD objects may vary significantly. So, the deviation of the reliability of the first and the second information may provide a reliable detection of OOD objects.

In practice, determining if the object is an OOD object may comprise determining that the object is an OOD object if the deviation is equal to or larger than a predefined threshold. The skilled person having benefit from the present disclosure will appreciate that the threshold can be adapted appropriately and/or adapted to achieve a desired accuracy or reliability in detecting OOD objects. Apart from that, the threshold may be adapted in consideration of specifications of the hardware, e.g., a spatial resolution of sensors, used for object detection.

In practice, the threshold may be chosen manually. Alternatively, automatic parametrization may be used for setting or adjusting the threshold. Accordingly, the method may further comprise applying machine learning based on a dedicated training data set indicative of one or more OOD objects to adjust the threshold such that an error rate of the OOD object detection is reduced. In this way, the threshold may be adapted more accurately to achieve a higher accuracy of the OOD object detection than for a manually chosen threshold.

The skilled person having benefit from the present disclosure will appreciate that an arbitrary metric or measure may be used to obtain the above deviation. In practice, the deviation may be indicative of a Kullback-Leibler (KL) divergence.

In some embodiments, the deviation is indicative of an average value, e.g., an average value of multiple deviations between the reliability of information on the object (measured/obtained) at three or more point in time.

So, the skilled person will appreciate that embodiments of the present disclosure may be also applied to more than two points in time. In practice, the information related to the object may be obtained also for more than two points in time. As well, the approach of the present disclosure may be applied to different sensors and sensor data. In practice, the proposed approach, e.g., is applied to an image series including two or more images - for automotive applications, e.g., for a series of images of a traffic environment.

Accordingly, the first sensor data may comprise at least one first image of an image series and the second sensor data may comprise at least one second image of the image series. For such applications, the method, e.g., comprises determining image-wise information related to the object for a plurality of images of the image series and determining if the object is an OOD object based on the image-wise information. In this way, a temporal consistency may be determined more accurately to detect OOD objects more reliably. Thus, in automotive applications using object detection, a higher safety level may be achieved, e.g., in applications of assisted or autonomous driving.

The skilled person having benefit from the present disclosure will appreciate that the OOD object detection may be parameterized appropriately to achieve a desired performance. In practice, e.g., capture settings or a selection of images for the OOD object detection may be adapted appropriately to achieve a desired reliability or accuracy. For this, appropriate parameters may be set or adjusted accordingly. To this end, such parameters may be set or adapted manually. Alternatively, such parameters may be set or adapted automatically, e.g., using automatic parametrization. In this way, the parameters may be set or adapted more accurately and/or more efficiently than manually.

To this end, the method may comprise applying machine learning based on a dedicated training data set indicative of one or more OOD objects to adjust parameters defining a number and/or selection of images for the OOD object detection such that an error rate of the OOD object detection is reduced.

In practice, the proposed method may be implemented accordingly in a computer program.

Accordingly, embodiments of the present disclosure may provide a computer program comprising instructions which, when the computer program is executed by a computer, cause the computer to carry out the proposed method. In this way, an apparatus may be caused to execute the proposed method.

So, embodiments of the present disclosure may also provide an apparatus comprising one or more interfaces for communication and a data processing circuit configured to execute the proposed method.

In automotive applications, such an apparatus may be implemented in a vehicle. Accordingly, embodiments of the present disclosure may also provide a vehicle comprising the proposed apparatus.

Further, embodiments are now described with reference to the attached drawings. **It** should be noted that the embodiments illustrated by the referenced drawings show merely optional embodiments as an example and that the scope of the present disclosure is by no means limited to the embodiments presented.

### Brief Description of the Drawings

- Fig. 1: shows an exemplary use case of OOD detection;
- Fig. 2: shows a flow chart schematically illustrating an embodiment of a method for OOD object detection;
- Fig. 3: shows an example of an embodiment of the proposed approach for a trained object;
- Fig. 4: shows an example of the proposed approach for an OOD object; and
- Fig. 5: shows a block diagram schematically illustrating an embodiment of an apparatus according to the proposed approach.

### Detailed Description

As the skilled person appreciates, OD is widely used in computer vision tasks such as image annotation, vehicle counting, activity recognition, face detection, face recognition, and video object co-segmentation. Other applications of OD provide for classifying and characterizing (e.g., detecting, measuring, localizing) objects in the environment of vehicles for assisted or autonomous driving. However, such classifying or characterizing capabilities may be limited to a few classes of objects which occur frequently enough in training data for training an appropriate DNN. Hence, DNNs may fail to recognize OOD object which occur too rarely or not at all. The skilled person will still appreciate that it may be worth recognizing OOD objects, even though they cannot be classified or characterized any further, to take appropriate measures, e.g., to avoid a collision with an OOD object in automotive applications. Accordingly, the present disclosure proposes an approach to detect such OOD objects more reliably.

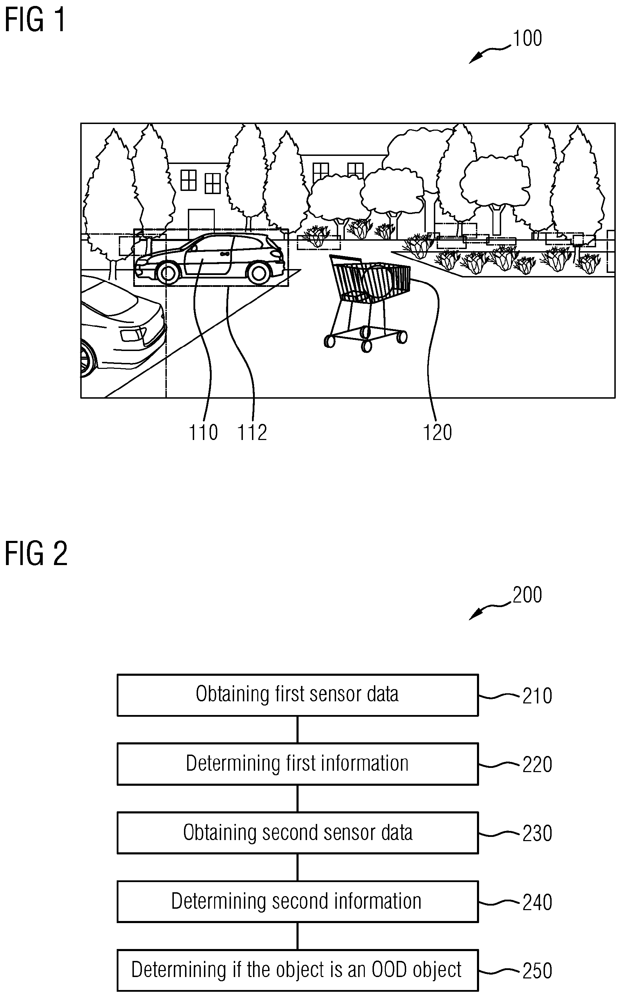

Fig. 1 illustrates an exemplary traffic scene 100 to show a possible use case of the proposed approach.

A vehicle equipped with an assisted/autonomous driving system (ADS) is trained to detect common road-users 110 (pedestrians, cars, motorcycles, and/or the like). In doing so, the ADS creates bounding boxes 112 indicating a position and size of the road users 110 to maneuver the vehicle based on them, e.g., to avoid collisions. As presented in Fig. 1 a person may leave his/her shopping cart 120 unattended, and it may end up in front of the vehicle. If the ADS does not feature OOD detection, it might not recognize the obstacle, as it is not amongst the common road-user classes. Consequently, the vehicle may collide with the shopping cart 120. An OOD detection system may recognize the shopping cart 120. However, the detection may propose a wrong or changing properties of the object, leading to wrong subsequent processing results. Hence, for a higher safety, it may be desired to provide an OOD detection system recognizing OOD objects with a higher reliability.

The present disclosure proposes an approach for an improved OOD object detection.

An embodiment of the method according to the proposed approach is laid out hereafter in more detail with reference to Fig. 2.

Fig. 2 shows a flow chart schematically illustrating an embodiment of a method 200 for OOD object detection. In context of the present disclosure, OOD object detection can be understood as the identification of objects in sensor data that are seldom with respect to a given distribution (presence of other object types) or not present at all, e.g., the distribution of the training data of a machine learned model for a (deep) neural network.

The method 200 comprises obtaining 210 first sensor data of an object at a first point in time and determining 220 first information related to the object based on the first sensor data. In practice, the proposed approach is, e.g., applied in connection with object detection from one or more images - in automotive applications for assisted or autonomous driving, e.g., for characterizing or classifying objects based on one or more images of a traffic environment of a vehicle. Accordingly, the sensor data may comprise one or more images of a traffic environment. The first information can be any kind of information which can be obtained from the sensor data - in automotive applications, e.g., any information on objects of the traffic environment (other road users, roads, obstacles, infrastructure objects, and/or the like). For object classification tasks, the information, e.g., indicates a class of the object. To this end, e.g., object detection is applied to the sensor data. For this, e.g., an appropriately trained neural network is used. In practice, such neural networks may apply certain object models of different object classes to classify objects based on the sensor data. In doing so, the neural network may also determine a reliability of the classification.

So, the information may also indicate how reliably the determined object class corresponds to an actual object class of the object in reality.

Embodiments of the present disclosure are based on the finding that successive observations of OOD objects usually are inconsistent to each other, i.e., that observations of the same OOD object significantly deviate from each other. A basic idea of the present disclosure, therefore, is to identify OOD objects based on inconsistent observations. In other words, OOD objects may be detected based on a temporal inconsistency of observations of them.

For this, the method 200 provides for obtaining 230 second sensor data of the object at a second point in time and determining 240 second information related to the object based on the second sensor data. For comparability with the first sensor data and first information, the second sensor data and the second information may be of the same type. So, the second sensor data may also comprise one or more images and the second information may be also indicative of an object class of the object. In practice, the first and the second sensor data, e.g., are obtained using the same or at least a similar sensor. In embodiments, the images of the first and the second sensor data are from an image series recorded by a camera system of the vehicle. The skilled person will appreciate that embodiments of the present disclosure may also conduct determining of the information from the first sensor data in parallel to retrieval of the second sensor information. Determining information from the second sensor information may also be parallelized to determining information from the first sensor information if the OD model allows independent processing of subsequent sensor data.

But, although explanations made herein may be limited to images, it is noted that the proposed approach can be also applied for lidar data, radar data, and/or the like as sensor data.

Further, the method 200 comprises determining 250 if the object is an OOD object based on the first and the second information. In doing so, for an OOD object, the first and the second information may be inconsistent to each other. In classification tasks, the first and the second information, e.g., are indicative of different object classes for the same object. In such cases, the object can be considered an OOD object, and an appropriate measure may be taken - for automotive applications, e.g., including an emergency brake and/or an evasive maneuver to avoid a collision with the OOD object. Otherwise, if the first and the second information are consistent the object can be considered a "well-trained" object. In such cases, the object may be treated according to a predefined behavior of the vehicle.

The skilled person having benefit from the present disclosure will appreciate that the proposed approach can be applied for an arbitrary amount of sensor data. In practice, it is, e.g., applied to a video or image series of a camera system.

In such embodiments, the first sensor data may comprise at least one first image of an image series and the second sensor data comprises at least one second image of the image series and the method may comprise determining image-wise information related to the object for a plurality of images of the image series and determining if the object is an OOD object based on the image-wise information.

So, a core idea of the proposed approach is based on the finding that regions in (successively recorded) images, where predictions about attributes (e.g., object class) of this region change untypically, may indicate an OOD object.

In other words, the present approach applies anomaly detection based on temporal sequences and proposes to identify (input) regions in the sensor data (images) where a temporal evolvement of the predicted attributes is anomalous, e.g., according to an anomaly detection criterion. Embodiments of the proposed suggest using an indicator value to determine whether the input region and the respective object therein belongs to an OOD object.

For this, the anomaly detection can be based on the temporal behavior of so-called "(class) logits" that, e.g., indicate how certain the object belongs to an object class from a predefined plurality of different object classes. So, the class logits can be understood as a score for the reliability of the information on the class of the object. A resulting anomalousness score obtained per tracked input region can then be used as an indicator for out-of-distribution objects.

One approach to identify an anomalous behavior of an object is based on the assumption that, if the object is known (i.e., included in said predefined plurality of different classes), the respective class logits of the object stay stable over time and several successively recorded images of the object, i.e., stays approximately the same (within a certain or predefined range) even under the slight changes in inputs coming from movements. So, OOD objects can be detected from significant changes of their class logits beyond a certain range. For this, the Kullback-Leibler (KL) divergence between class logits of the object in different images can be used as measure for the change of the class logits. In doing so, an image series including N successive images can be used, wherein N denotes an arbitrary natural number. On this image series, the average (AVG) of values indicating the KL divergence between two images of the image series may be determined. For this, values of the KL divergence between subsequent frames, or between any pair of frames in the image series can be used. The skilled person will appreciate that the KL divergence is only one of multiple exemplary measures that may be used to determine a deviation between the image-wise information of the object in images from the image series. So, in practice, the KL divergence can be replaced by any other score of change between class logits of the same input region or the respective object in two or more images. The number of images used for the anomaly detection can be chosen dynamically (i.e., the number can vary over time), or can be set to a fixed maximum. In the latter case, the maximum, preferably, is the number of previous frames to which the image region could be tracked back. The average KL divergence then serves as a score for the (rate of) change, with a high score, i.e., a score higher than a predefined threshold, indicating that the considered image region or the respective object belongs to an OOD object.

In practice, the proposed approach can be applied to an arbitrary number of input regions or objects. The skilled person having benefit from the present disclosure will appreciate that the proposed approach even can be applied simultaneously to multiple input regions or object. For this, multiple or different image regions or objects can be processed in parallel.

To detect changes, it is proposed to identify the same object or associate respective regions in the images with each other for comparison. In the above example, e.g., it is proposed to identify the object in multiple, e.g., consecutive, images of the image series (e.g., in the first sensor data and the second sensor data). To this end, it is proposed to apply object tracking. One exemplary approach for object tracking, e.g., provides for pixel tracking of pixels of the object, also referred to as "pixel guided association". In doing so, the movement of input regions (e.g., pixels in an image) and the attributes predicted for these regions (e.g., object class) can be tracked over several subsequent images to obtain a temporal sequence of class logits per image region (that potentially moves in-between images of the image series).

The tracking of input regions or objects allows to follow movements of input regions or objects over time. For this, it creates associations between a location in one input frame (e.g., an image in the second sensor data) with a location in a previous input frame (e.g., an image in the first sensor data), if they both belong to the same region or object in the input. An example would be an object moving relative to the vehicle and, thus, "moving" in the images of the image series. In practice, for this, bounding boxes may be generated and associated to constitute a time-aware input region. Exemplary approaches for tracking are pixel-tracking or object tracking, using optical flow, or Kalman filters.

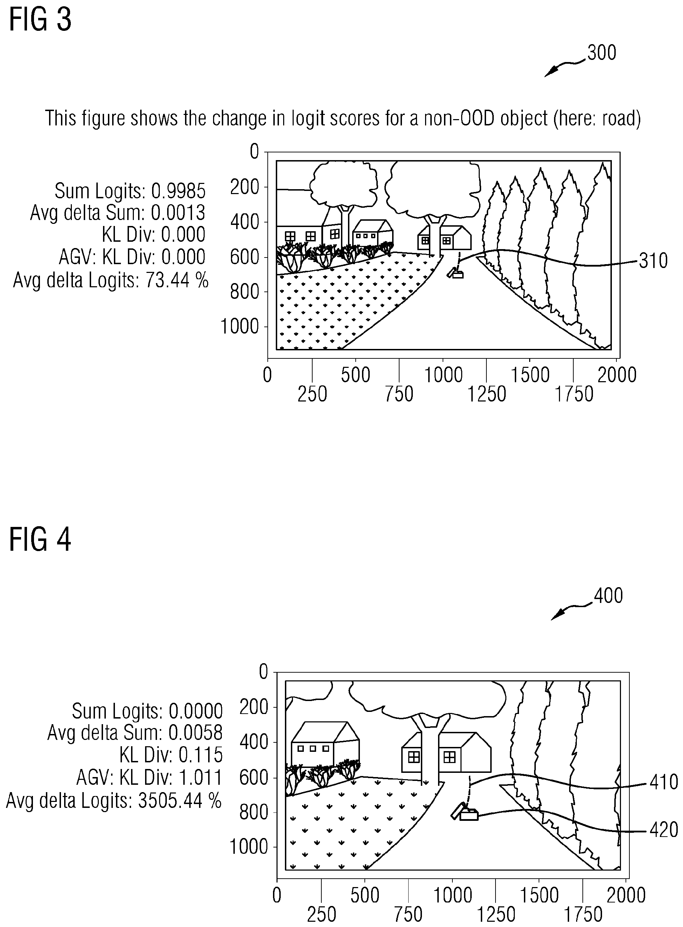

Embodiments of the proposed approach are laid out in more detail below with reference to Fig. 3 and Fig. 4.

Fig. 3 shows a use case of the proposed approach for an object known to the neural network, also referred to as an "in distribution (ID) object", e.g., for an object class of the plurality of predefined object classes.

More specifically, Fig. 3 shows an image 300 of a traffic environment. The image 300, e.g., is one of multiple images of an image series of the traffic environment captured by a camera (not shown). The camera, e.g., is attached to a vehicle (not shown).

In the example of Fig. 3, the object, e.g., is a road which is detected and classified as such from the image series. In doing so, the object is tracked over multiple images of the image series and classified image-wise, i.e., the object (here: the road) is repeatedly classified for single images of the image series, as laid out above. Thereby, the object may move relative to the vehicle, e.g., because the vehicle may move, and, thus, the object may move relative to the vehicle indicated by a trajectory 310 in the image 300.

In contrast to Fig. 3, Fig. 4 shows a use case of the proposed approach for an OOD object. As can be seen, Fig. 4 shows an image 400 of (approximately) the same traffic environment. The OOD object here, e.g., is an undefined obstacle 420 (here e.g., a cardboard structure) which did not occur in any training data of a neural network for object detection. Similar to the example of Fig. 3, the undefined obstacle 420 is tracked and classified image-wise. As also in Fig. 3, the object, i.e., the carboard structure 420 moves relative to the vehicle or camera and, thus, within the image series as indicated by a trajectory 410 in the image 400.

Fig. 3 and Fig. 4 also show results of the proposed approach for the ID object (road) and the undefined obstacle, respectively. More specifically, Fig. 3 and Fig. 4 show a sum of the class logits ("Sum Logits") aggregated over images of the image series, a sum of an average deviation ("Avg delta sum") of class logits between consecutive images, and a KL divergence ("KL Div") between class logits of the shown image 300 and 400, respectively, and a previous image. Further, Fig. 3 and Fig. 4 show results of an average KL divergence ("AVG: KL Div") between class logits of two images and an average percentual deviation ("Avg delta Logits") of class logits of two images.

As can be seen from the shown results, the deviation of class logits for the OOD object, here the undefined obstacle 420 is significantly higher than for the trained object, here road.

For example, the AVG: KL Div for the road is 0.0 while it is 1.011 for the undefined obstacle 420. Accordingly, the other results also indicate a higher deviation of the class logits for the obstacle 420 than for the road. In embodiments, the road of Fig. 3, therefore, is considered as the determined object - as road - while the obstacle 420 is considered an OOD object based on the determined deviation of the observations (class logits). For this, the AVG: KL Div, e.g., is compared with a predefined threshold and the object is considered an OOD object if the AVG: KL Div is equal to or higher than the predefined threshold. In practice, the threshold, e.g., is 0.5 for the AVG: KL Div.

The skilled person having benefit from the present disclosure will appreciate that the threshold can be adjusted to achieve a desired error rate to falsely assume an ID object as an OOD object and/or vice versa.

As mentioned earlier, the threshold may be determined manually but it can be also determined automatically, e.g., using machine learning. For this, a neural network implementing the proposed approach may be trained based on a dedicated training data set indicative of one or more OOD objects using machine learning, e.g., supervised, or unsupervised learning. In doing so, the neural network can be trained to adjust the threshold such that a desired error rate for falsely detecting an object of a known object class as OOD object and/or vice versa.

The skilled person having benefit from the present disclosure will appreciate that, likewise, also other parameters of the present approach may be adjusted. Similarly, e.g., a metric for capturing or selecting images of the image series for OOD detection may be trained. In doing so, a metric may be achieved that only selects a portion of the image series for the OOD detection. In this way, e.g., a number and/or a specific selection of images for the OOD detection may be achieved. An exemplary metric may provide for using only a portion of the images, e.g., only every second image of the image series for the OOD detection. In this way, a desired tradeoff of the error rate and a required computation power for the OOD detection may be achieved.

The proposed approach, e.g., is implemented in a computer program comprising instructions which, when the computer program is executed by a computer, cause the computer to carry out what is proposed herein.

As well, the proposed approach may be implemented in an apparatus, e.g., an apparatus for OOD object detection. The skilled person having benefit from the present disclosure will appreciate that the proposed method may be executed on a vehicle for automotive applications of the proposed approach. Accordingly, the apparatus may be installed in a vehicle. In some embodiments, the proposed approach is implemented in an ADS for a vehicle.

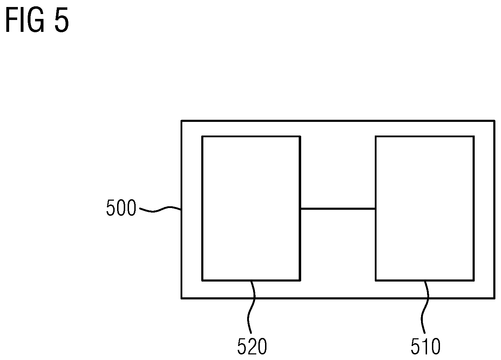

An exemplary embodiment of such an apparatus is laid out in more detail with reference to Fig. 5.

Fig. 5 schematically illustrates a block diagram of an embodiment of an apparatus 500 comprising one or more interfaces 510 for communication and a data processing circuit 520 configured to execute the method of any one of the preceding claims.

In embodiments, the one or more interfaces 510 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 520 may correspond to or comprise any type of programable hardware. So, examples of the data processing circuit 520, e.g., comprise a memory, microcontroller, field programmable gate arrays, one or more central and/or graphical processing units. To execute the proposed method, the data processing circuit 520 may be configured to access or retrieve an appropriate computer program for the execution of the proposed method from a memory of the data processing circuit 520 or a separate memory which is communicatively coupled to the data processing circuit 520.

## Claims

1. A method for out-of-distribution, OOD, object detection, the method comprising:
obtaining (210) first sensor data of an object at a first point in time;
determining (220) first information related to the object based on the first sensor data, wherein the first information indicates a class of the object¹ Description page 8, lines 21-22: "For object classification tasks, the information, e.g., indicates a class of the object", see also current claim 3.;
obtaining (230) second sensor data of the object at a second point in time;
determining (240) second information related to the object based on the second sensor data, wherein the second information indicates a class of the object² Description page 9, lines 8-10: "So, the second sensor data may also comprise one or more images and the second information may be also indicative of an object class of the object", see also current claim 3.; and
determining (250) if the object is an OOD object (420) based on the first and the second information, wherein determining if the object is an OOD object comprises checking if the first and the second information is inconsistent and determining that object is an OOD object if the first and the second information are inconsistent, wherein the first and the second information are inconsistent if the first and the second information indicate different object classes for the object³ Descriptio page 3, lines 21-25: "determining if the object is an OOD object may comprise checking if the first and the second information is inconsistent and determining that object is an OOD object if the first and the second information are inconsistent. The first and the second information, e.g., are inconsistent if the first and the second information indicate different object classes for the object", see also current claim 4..

2. The method of claim 1, wherein the method further comprises tracking, in the first and the second senor data, at least one pixel of the object for identifying the object in the second sensor data.

3. The method of any one of the preceding claims, wherein determining if the first and the second information are inconsistent comprises:
obtaining a reliability of the first information and the second information; and
determining if the object is an OOD object based on a deviation between the reliability of the first and the second information.

4. The method of claim 3, wherein determining if the object is an OOD object comprises determining that the object is an OOD object if the deviation is equal to or larger than a predefined threshold.

5. The method of claim 4, wherein the method further comprises applying machine learning based on a dedicated training data set indicative of one or more OOD objects to adjust the threshold such that an error rate of the OOD object detection is reduced.

6. The method of claim 4 or 5, wherein the deviation is indicative of a Kullback-Leibler divergence.

7. The method of any one of the claims 4 to 6, wherein the deviation is indicative of an average value.

8. The method of any one of the preceding claims, wherein the first sensor data comprises at least one first image of an image series and the second sensor data comprises at least one second image of the image series, wherein the method comprises determining image-wise information related to the object for a plurality of images of the image series and determining if the object is an OOD object based on the image-wise information.

9. The method of claim 8, wherein the method comprises applying machine learning based on a dedicated training data set indicative of one or more OOD objects to adjust parameters defining a number and/or selection of images for the OOD object detection such that an error rate of the OOD object detection is reduced.

10. A computer program comprising instructions which, when the computer program is executed by a computer, cause the computer to carry out the method of any one of the preceding claims.

11. An apparatus comprising:
one or more interfaces for communication; and
a data processing circuit configured to execute the method of any one of the claims 1 to 9.

12. A vehicle comprising the apparatus of claim 11.

## Patentansprüche

1. Verfahren zur Erkennung von Objekten außerhalb der Verteilung (OOD), wobei das Verfahren Folgendes umfasst:
Erhalten (210) erster Sensordaten eines Objekts zu einem ersten Zeitpunkt;
Bestimmen (220) erster Informationen bezüglich des Objekts basierend auf den ersten Sensordaten, wobei die ersten Informationen eine Klasse des Objekts angeben¹ Beschreibung Seite 8, Zeilen 21-22: "Bei Objektklassifizierungsaufgaben gibt die Information z. B. eine Klasse des Objekts an", siehe auch aktuellen Anspruch 3.;
Erhalten (230) zweiter Sensordaten des Objekts zu einem zweiten Zeitpunkt;
Bestimmen (240) zweiter Informationen bezüglich des Objekts basierend auf den zweiten Sensordaten, wobei die zweiten Informationen eine Klasse des Objekts angeben² Beschreibung Seite 9, Zeilen 8-10: "Somit können die zweiten Sensordaten auch ein oder mehrere Bilder umfassen, und die zweiten Informationen können auch eine Objektklasse des Objekts angeben", siehe auch aktuellen Anspruch 3.; und
Bestimmen (250), ob das Objekt ein OOD-Objekt (420) ist, basierend auf der ersten und der zweiten Information, wobei Bestimmen, ob das Objekt ein OOD-Objekt ist, Prüfen, ob die erste und die zweite Information inkonsistent sind, und Bestimmen, dass das Objekt ein OOD-Objekt ist, wenn die erste und die zweite Information inkonsistent sind, umfasst, wobei die erste und die zweite Information inkonsistent sind, wenn die erste und die zweite Information unterschiedliche Objektklassen für das Objekt angeben³ Beschreibung Seite 3, Zeilen 21-25: "Das Bestimmen, ob das Objekt ein OOD-Objekt ist, kann das Prüfen, ob die erste und die zweite Information inkonsistent sind, und das Bestimmen, dass das Objekt ein OOD-Objekt ist, wenn die erste und die zweite Information inkonsistent sind, umfassen. Die erste und die zweite Information sind z. B. inkonsistent, wenn die erste und die zweite Information unterschiedliche Objektklassen für das Objekt angeben", siehe auch aktuellen Anspruch 4..

2. Verfahren nach Anspruch 1, wobei das Verfahren ferner Verfolgen mindestens eines Pixels des Objekts in den ersten und den zweiten Sensordaten zum Identifizieren des Objekts in den zweiten Sensordaten umfasst.

3. Verfahren nach einem der vorhergehenden Ansprüche, wobei Bestimmen, ob die erste und die zweite Information inkonsistent sind, Folgendes umfasst:
Erhalten einer Zuverlässigkeit der ersten Information und der zweiten Information; und
Bestimmen, ob das Objekt ein OOD-Objekt ist, basierend auf einer Abweichung zwischen der Zuverlässigkeit der ersten und der zweiten Information.

4. Verfahren nach Anspruch 3, wobei Bestimmen, ob das Objekt ein OOD-Objekt ist, Bestimmen umfasst, dass das Objekt ein OOD-Objekt ist, wenn die Abweichung gleich oder größer als ein vordefinierter Schwellenwert ist.

5. Verfahren nach Anspruch 4, wobei das Verfahren ferner Anwenden von maschinellem Lernen basierend auf einem dedizierten Trainingsdatensatz, der ein oder mehrere OOD-Objekte angibt, umfasst, um den Schwellenwert derart anzupassen, dass eine Fehlerrate der OOD-Objekterkennung reduziert wird.

6. Verfahren nach Anspruch 4 oder 5, wobei die Abweichung eine Kullback-Leibler-Divergenz angibt.

7. Verfahren nach einem der Ansprüche 4 bis 6, wobei die Abweichung einen Mittelwert angibt.

8. Verfahren nach einem der vorhergehenden Ansprüche, wobei die ersten Sensordaten mindestens ein erstes Bild einer Bildserie umfassen und die zweiten Sensordaten mindestens ein zweites Bild der Bildserie umfassen, wobei das Verfahren Bestimmen von bildweisen Informationen bezüglich des Objekts für eine Vielzahl von Bildern der Bildserie und Bestimmen, ob das Objekt ein OOD-Objekt ist, basierend auf den bildweisen Informationen umfasst.

9. Verfahren nach Anspruch 8, wobei das Verfahren Anwenden von maschinellem Lernen basierend auf einem dedizierten Trainingsdatensatz, der ein oder mehrere OOD-Objekte angibt, umfasst, um Parameter, die eine Anzahl und/oder Auswahl von Bildern für die OOD-Objekterkennung definieren, derart anzupassen, dass eine Fehlerrate der OOD-Objekterkennung reduziert wird.

10. Computerprogramm, umfassend Anweisungen, die, wenn das Computerprogramm durch einen Computer ausgeführt wird, den Computer veranlassen, das Verfahren nach einem der vorhergehenden Ansprüche durchzuführen.

11. Einrichtung, umfassend:
eine oder mehrere Schnittstellen zur Kommunikation; und
eine Datenverarbeitungsschaltung, die konfiguriert ist, um das Verfahren nach einem der Ansprüche 1 bis 9 auszuführen.

12. Fahrzeug, umfassend die Einrichtung nach Anspruch 11.

## Revendications

1. Procédé de détection d'objet hors distribution (OOD), le procédé comprenant :
l'obtention (210) de premières données de capteur d'un objet à un premier instant ;
la détermination (220) des premières informations relatives à l'objet sur la base des premières données de capteur, dans lequel les premières informations indiquent une classe de l'objet ¹Description page 8, lignes 21-22 : « Pour les tâches de classification d'objet, les informations indiquent par exemple une classe de l'objet », voir également la revendication actuelle 3. ;
l'obtention (230) de secondes données de capteur de l'objet à un second instant ;
la détermination (240) des secondes informations relatives à l'objet sur la base des secondes données de capteur, dans lequel les secondes informations indiquent une classe de l'objet²Description page 9, lignes 8-10 : « Ainsi, les secondes données de capteur peuvent également comprendre une ou plusieurs images et les secondes informations peuvent également indiquer une classe d'objet de l'objet », voir également la revendication actuelle 3. ; et
la détermination (250) si l'objet est un objet OOD (420) sur la base des premières et secondes informations, dans lequel la détermination si l'objet est un objet OOD comprend la vérification si les premières et les secondes informations sont incohérentes et la détermination que l'objet est un objet OOD si les premières et les secondes informations sont incohérentes, dans lequel les premières et les secondes informations sont incohérentes si les premières et les secondes informations indiquent des classes d'objet différentes pour l'objet ³Description page 3, lignes 21-25 : « La détermination si l'objet est un objet OOD peut comprendre la vérification si les premières et les secondes informations sont incohérentes et la détermination que l'objet est un objet OOD si les premières et les secondes informations sont incohérentes. Les premières et les secondes informations, par exemple, sont incohérentes si les premières et les secondes informations indiquent des classes d'objet différentes pour l'objet », voir également la revendication actuelle 4..

2. Procédé selon la revendication 1, dans lequel le procédé comprend en outre le suivi, dans les premières et les secondes données de capteur, d'au moins un pixel de l'objet pour identifier l'objet dans les secondes données de capteur.

3. Procédé selon l'une quelconque des revendications précédentes, dans lequel la détermination si les premières et les secondes informations sont incohérentes comprend :
l'obtention d'une fiabilité des premières informations et des secondes informations ; et
la détermination si l'objet est un objet OOD sur la base d'un écart entre la fiabilité des premières et des secondes informations.

4. Procédé selon la revendication 3, dans lequel la détermination si l'objet est un objet OOD comprend la détermination que l'objet est un objet OOD si l'écart est égal ou supérieur à un seuil prédéfini.

5. Procédé selon la revendication 4, dans lequel le procédé comprend en outre l'application d'un apprentissage machine sur la base d'un ensemble de données d'entraînement dédié représentatif d'un ou plusieurs objets OOD, afin d'ajuster le seuil de manière à réduire le taux d'erreur de la détection d'objet OOD.

6. Procédé selon la revendication 4 ou 5, dans lequel l'écart indique une divergence de Kullback-Leibler.

7. Procédé selon l'une quelconque des revendications 4 à 6, dans lequel l'écart indique une valeur moyenne.

8. Procédé selon l'une quelconque des revendications précédentes, dans lequel les premières données de capteur comprennent au moins une première image d'une série d'images et les secondes données de capteur comprennent au moins une seconde image de la série d'images, dans lequel le procédé comprend la détermination d'informations image par image relatives à l'objet pour une pluralité d'images de la série d'images et la détermination si l'objet est un objet OOD sur la base des informations image par image.

9. Procédé selon la revendication 8, dans lequel le procédé comprend l'application d'un apprentissage machine sur la base d'un ensemble de données d'entraînement dédié représentatif d'un ou plusieurs objets OOD afin d'ajuster les paramètres définissant un nombre et/ou une sélection d'images pour la détection d'objet OOD de manière à réduire le taux d'erreur de la détection d'objet OOD.

10. Programme informatique comprenant des instructions qui, lorsque le programme informatique est exécuté par un ordinateur, amènent l'ordinateur à mettre en œuvre le procédé selon l'une quelconque des revendications précédentes.

11. Appareil comprenant :
une ou plusieurs interfaces de communication ; et
un circuit de traitement de données configuré pour exécuter le procédé selon l'une quelconque des revendications 1 à 9.

12. Véhicule comprenant l'appareil selon la revendication 11.
